# FASCICULE DE BREVET EUROPEEN

(11) **EP 2 301 843 B1**
(45) Date de publication et mention de la délivrance du brevet: **29.08.2012**
(21) Numéro de dépôt: 10009472.1
(22) Date de dépôt: 13.09.2010
(51) Int. Cl.: B64C 27/48, C09J 5/06, F24H 3/04

(54) **Outillage portatif pour coller une bague à une chape d'un manchon de pale, et procédé de collage de cette bague**
Mobile Ausrüstung zum Kleben einer Buchse an eine Blattverstellgabel einer Rotorblattmanschette und Verfahren zum Kleben dieser Blattverstellgabel
Portable tool for glueing a bush to a trunnion yoke of a rotor blade cuff and method of glueing this trunnion yoke

(30) Priorité: 23.09.2009 FR 0904532
(43) Date de publication de la demande: 30.03.2011
(73) Titulaire: EUROCOPTER, 13725 Marignane (FR)
(72) Inventeur: Ducamp, Christophe, 13100 Aix-en-Provence (FR)
(74) Mandataire: GPI & Associés

(56) Documents cités:
- US-A- 3 607 545
- US-A1- 2001 010 251

## Description

La présente invention concerne un outillage portatif pour coller une bague à une chape d'un manchon de pale d'un rotor, et plus particulièrement à une chape de fixation d'un amortisseur de pale d'un rotor d'un giravion de type hélicoptère. De plus, l'invention a pour objet le procédé de collage de telles bagues.

En effet, un giravion comporte au moins un rotor principal pour assurer sa sustentation, voire sa propulsion pour un hélicoptère.

Un tel rotor comporte généralement une pluralité de pales, chaque pale étant fixée au moyeu du rotor par un manchon, dénommé parfois manchette. En référence au document FR2898581, il est à noter que ce manchon peut éventuellement être intégré à la pale elle-même.

Par ailleurs, il est aussi courant d'équiper le rotor d'une pluralité d'amortisseurs, dénommés parfois « adaptateurs de fréquence ». Dès lors, chaque amortisseur est fixé par exemple au manchon d'une pale et au moyeu du rotor, ou encore au manchon d'une pale et au manchon de la pale immédiatement adjacente pour les amortisseurs dénommés classiquement « amortisseurs interpales ».

Ainsi, chaque amortisseur comporte au moins une extrémité entourant une rotule, ladite rotule étant brochée entre deux joues d'une chape d'un manchon de pale. On note que l'homme du métier dénomme parfois « oreille » les joues d'une chape.

Plus précisément, chaque joue étant équipée d'un insert monté en force dans un orifice de la joue ainsi que d'une bague de fixation apte à protéger ledit insert, chaque rotule est agencée entre deux bagues, une broche traversant alors les inserts des deux joues et leurs bagues associées ainsi que la rotule.

Ce dispositif de fixation d'une rotule à une chape est très efficace.

Cependant, on constate parfois que l'extrémité de l'amortisseur entourant la rotule frotte contre les bagues de la chape du manchon. Le frottement engendre une détérioration de ces bagues, cette détérioration induisant à terme leurs remplacements.

Pour effectuer ce remplacement, l'homme du métier démonte la pale et son manchon du moyeu. Ensuite, il colle sous pression et à température ambiante une nouvelle bague, contre la joue à équiper. Le cycle de polymérisation à température ambiante de la colle est achevé au bout de sept jours environ.

Il en résulte une indisponibilité de la pale, et par conséquent du giravion, durant une durée importante. On comprend que cette indisponibilité est pénalisante pour l'utilisateur de ce giravion, qui peut avoir tendance à réduire le cycle de polymérisation.

Il est à noter que les techniques connues visent à utiliser une colle qui polymérise à température ambiante afin de ne pas détériorer le manchon de la pale par un chauffage important.

L'arrière plan technologique inclut par exemple le document US20011010251 pourvu de deux bases enserrant entre elles deux pièces à coller, chaque base incluant un moyen de chauffage par infrarouge et un moyen de refroidissement par air.

Le document US3607545 présente un bâti pour assembler des éléments d'une pale d'un rotor.

La présente invention a alors pour objet de proposer un outillage s'affranchissant de la limitation mentionnée ci-dessus, en permettant le remplacement d'au moins une bague d'une chape de fixation d'un amortisseur d'un rotor de giravion en une durée courte n'impliquant pas une immobilisation longue du giravion.

Ainsi l'invention concerne un outillage portatif apte à coller une ou deux bagues respectivement à une ou deux joues d'une chape d'un manchon de pale, chaque joue comportant une première et une deuxième surfaces, les premières surfaces des première et deuxième joues étant en regard l'une de l'autre, chaque bague étant disposée autour d'un orifice de brochage ménagé dans la joue correspondante.

Il en résulte que l'invention se trouve dans le domaine technique restreint et particulier de bagues agencées sur des joues d'un manchon de pale. En effet, la destination de la bague rend le collage de cette bague très particulier et délicat, le collage ne devant en aucun cas remettre en cause l'intégrité physique du manchon.

L'outillage portatif est notamment remarquable en ce qu"il comporte :
- une chaufferette, par exemple une chaufferette commercialisée sous la référence HOT GUN 1000,
- un diffuseur .délimitant un espace interne alimenté en air chaud par ladite chaufferette via un conduit d'acheminement pour chauffer ladite bague à coller, l'espace interne représentant un tunnel de chauffe,
- un support de bague par bague à coller agencé à une extrémité dudit diffuseur,
- au moins un capteur de température pour déterminer la température de la bague à coller,
- et un moyen de commande de ladite chaufferette recevant les informations dudit capteur de température, par exemple une valise de commande commercialisée sous la référence AHB380-D par Aeroform France.

Par suite, un opérateur dispose une bague dans le support de bague. Dès lors, l'opérateur chauffe cette bague via successivement la chaufferette, le conduit d'acheminement et le diffuseur, la chaufferette étant commandée par le moyen de commande qui applique le cycle de polymérisation à chaud de la colle employée.

Ainsi, l'opérateur agence l'outillage dans la chape d'un manchon et colle à chaud une bague contre une première surface d'une joue de la chape, par exemple en utilisant une colle de type HYSOL®. Il en résulte que la colle polymérise en environ une heure, au lieu de sept jours pour l'état de la technique ce qui est évidemment un avantage considérable.

Le collage à chaud de la bague est en effet étonnamment rendu possible par l'outillage, cet outillage permettant de chauffer la bague sans chauffer le corps du manchon.

De plus, on verra par la suite qu'il n'est pas nécessaire de démonter le manchon afin de coller la bague du fait du caractère portatif de l'outillage, ce qui optimise de fait la durée totale de remplacement de la bague.

L'outillage présente les caractéristiques telles que définies par la revendication 1 et éventuellement une ou plusieurs des caractéristiques additionnelles qui suivent.

Favorablement, l'outillage comporte un premier et un deuxième supports de bague, le premier support de bague étant agencé à une première extrémité du diffuseur, le deuxième support de bague étant agencé à une deuxième extrémité du diffuseur. Ainsi, le diffuseur chauffe deux bagues simultanément, ce qui autorise le remplacement des bagues d'une chape en une unique opération.

De plus, chaque support de bague peut comporter un plateau venant obturer une extrémité du diffuseur, le plateau ayant une première tranche en contact avec l'espace interne et une deuxième tranche apte à être en contact avec une première surface d'une joue, la deuxième tranche comportant un évidement conformé à la bague à coller et la première tranche ayant au moins un perçage mettant en relation l'espace interne et l'évidement.

L'air chaud fourni par la chaufferette pénètre dans l'espace interne du diffuseur et atteint donc la bague à coller par le ou les perçages ménagés dans la première tranche du plateau.

Chaque support de bague a alors pour fonction d'une part de positionner la bague à coller, et d'autre part d'acheminer de l'air chaud vers ladite bague.

L'outillage chauffe ainsi à coeur la bague, cette bague chauffant dès lors la colle à la température requise.

Additionnement, chaque support de bague comporte une cheminée solidaire du plateau s'étendant axialement à partir de la première tranche pour s'éloigner du diffuseur afin d'être apte à pénétrer dans l'orifice de brochage d'une joue, la cheminée comportant un orifice axial la traversant de part en part et débouchant sur l'espace interne. Le support de bague a alors globalement une section en forme de T.

Lorsque la bague de support est installée, la cheminée traverse non seulement l'orifice de brochage mais de fait aussi la bague à coller.

En raison de l'orifice axial, l'air chaud de l'espace interne du diffuseur pénètre à l'intérieur de la cheminée qui favorise donc le chauffage de la bague.

En outre, la cheminée a éventuellement un premier diamètre inférieur à un deuxième diamètre de l'orifice de brochage dans lequel cette cheminée est apte à s'étendre.

Dès lors, la cheminée comporte avantageusement au moins une lumière ménagée au travers de sa périphérie débouchant sur l'orifice axial. La lumière représente alors un conduit reliant l'orifice axial à l'orifice de brochage.

Par suite, l'air chaud peut chauffer la bague à coller par trois biais distincts :
- en passant par le ou les perçages de la première tranche du support de bague,
- par le biais du corps creux de la cheminée échauffé par l'air provenant du diffuseur qui circule dans son orifice axial,
- par l'air chaud sortant de la cheminée par sa ou ses lumières et atteignant la bague en descendant par l'orifice de brochage.

Par ailleurs, l'outillage peut comporter un bouchon par bague à coller apte à être accolé contre une deuxième surface d'une joue donnée en obturant l'orifice de brochage de ladite joue donnée, le bouchon étant fixé à un support de bague pour comprimer la bague à coller contre la première surface de la joue donnée.

En fixant le bouchon au support de bague, à l'aide d'un moyen de serrage de type vis par exemple, on plaque le support de bague contre la première surface d'une joue et le bouchon contre la deuxième surface de cette joue. En dimensionnant le moyen de serrage de manière adéquate, on peut garantir la pression requise pour le collage de la bague.

De plus, le bouchon obture l'orifice de brochage. Ainsi, si le support de bague est muni d'une cheminée apte à diffuser de l'air chaud dans cet orifice de brochage, alors le bouchon empêche cet air chaud de sortir de l'orifice de brochage au niveau de la deuxième surface. L'outillage restreint l'air chaud au niveau de la bague à coller et préserve donc le manchon de tout échauffement susceptible de le détériorer.

Pour optimiser la circulation d'air chaud dans l'orifice de brochage, le bouchon ayant une face apte à être accolée contre une deuxième surface d'une joue, cette face est partiellement évidée en son centre.

On note aussi que lorsque le support de bague possède une cheminée, le bouchon peut être traversé par un moyen de serrage apte à être vissé dans cette cheminée. Par exemple, on dispose un filetage autour de l'orifice axial de la cheminée et on visse le moyen de serrage dans cet orifice axial.

Selon une variante, le bouchon comporte une saillie de détrompage apte à coopérer avec un bord d'une joue, un moyen de détrompage étant communément un dispositif pour empêcher la mauvaise utilisation d'un instrument.

Par suite, le bord de la joue reliant la première surface à la deuxième surface de cette joue, la saillie de détrompage est conformée à la forme de ce bord pour positionner le bouchon dans la position requise par le constructeur. La saillie de détrompage saille en effet du bouchon pour épouser la forme du bord ce qui positionne le bouchon dans une unique position.

Un opérateur positionne alors obligatoirement le bouchon de manière adéquate.

Pour garantir la pression de collage exercée sur la bague, l'outillage comporte éventuellement un ressort taré apte à être agencé dans un orifice de brochage entre le bouchon et le support de bague associé.

En outre, l'outillage peut comporter un moyen de soutien pourvu d'au moins un pied apte à être broché au manchon à la place d'une pale, le moyen de soutien étant muni d'un moyen de fixation solidaire du pied, le moyen de fixation étant pourvu d'une glissière pour accueillir ladite chaufferette.

Dès lors, l'opérateur démonte la pale du manchon puis fixe le moyen de soutient à ce manchon, en le brochant en lieu et place de la pale. Ensuite, il fixe notamment la chaufferette au moyen de soutien.

Pour déterminer la température de la bague avec précision lors du collage, on agence le capteur de température dans le support de bague. Le capteur de température, un thermocouple par exemple, mesure alors la température du support de bague qui correspond sensiblement à la température de la bague à coller.

Enfin, pour coller les deux bagues d'une chape, l'outillage peut comporter :
- un premier et un deuxième supports de bague, le premier support de bague étant agencé à une première extrémité dudit diffuseur, ledit deuxième support de bague étant agencé à une deuxième extrémité dudit diffuseur,
- un premier et un deuxième capteurs de température agencés respectivement dans les premier et deuxième supports de bague, et
- un premier et un deuxième bouchons aptes à être fixés respectivement aux premier et deuxième supports de bague.

Outre l'outillage portatif et amovible, l'invention a pour objet le procédé mettant en oeuvre cet outillage et résultant du même concept inventif à savoir l'emploi d'un outillage pour coller à chaud une bague.

Selon l'invention, un procédé (revendication 14) pour coller à l'aide d'un outillage portatif une première et une deuxième bagues respectivement à une première et une deuxième joues d'une chape d'un manchon de pale, chaque joue comportant une première et une deuxième surfaces, les premières surfaces des première et deuxième joues étant en regard l'une de l'autre, chaque bague étant disposée autour d'un orifice de brochage de la joue correspondante; l'outillage portatif comportant une chaufferette, un diffuseur alimenté en air chaud par ladite chaufferette via un conduit d'acheminement, un premier et un deuxième supports de bague agencés respectivement à une première et une deuxième extrémités du diffuseur, un premier et un deuxième bouchons aptes à être fixés respectivement aux premier et deuxième supports de bague, un premier et un deuxième capteurs de température agencés respectivement dans les premier et deuxième supports de bague, et un moyen de commande de la chaufferette recevant les informations des premier et deuxième capteurs de température,

est notamment remarquable en ce que, durant une phase de préparation :
- on applique une colle entre chaque bague à coller et une première surface des joues, à savoir contre la bague à coller et /ou contre la première surface contre laquelle la bague doit être collée,
- on dispose une bague dans chaque support de bague et on plaque les premier et deuxième supports de bague contre respectivement la première surface des première et deuxième joues, à savoir le premier support de bague contre la première surface de la première joue et le deuxième support de bague contre la première surface de la deuxième joue,
- on dispose les premier et deuxième bouchons contre les deuxièmes surfaces des première et deuxième joues, puis on fixe ces premier et deuxième bouchons aux premier et deuxième supports de bague, le premier bouchon et le premier support de bague plaquant la première bague contre la première surface de la première joue alors que le deuxième bouchon et le deuxième support de bague plaquent la deuxième bague contre la première surface de la deuxième joue,
- on agence le diffuseur entre les premier et deuxième supports de bague,
- on relie la chaufferette au diffuseur par le conduit d'acheminement, puis on connecte cette chaufferette et les premier et deuxième capteurs de température au moyen de commande,

puis durant une phase de collage, le moyen de commande ordonne à la chaufferette de fournir de l'air au diffuseur à une température prédéterminée selon un cycle prédéterminé correspondant à la colle utilisée. Par exemple, le moyen de commande requiert d'atteindre une température de 90 degrés Celsius à une vitesse de 5 degrés Celsius par minute puis ordonne le maintien de cette température de 90 degrés Celsius durant une heure avant de requérir un retour à la température ambiante à une vitesse de 5 degrés Celsius par minute.

La température prédéterminée et le cycle prédéterminé sont clairement et facilement déterminés par l'opérateur dans la mesure où ils sont fixés par le fabricant de la colle utilisée.

L'invention et ses avantages apparaîtront avec plus de détails dans le cadre de la description qui suit avec un exemple de réalisation donné à titre illustratif en référence aux figures annexées qui représentent :
- la figure 1, un manchon de pale muni de bagues à remplacer,
- la figure 2, une vue schématique d'un outillage selon l'invention agencé sur un manchon,
- la figure 3, une coupe du diffuseur, des bagues de support et des bouchons de l'outillage agencés sur une chape d'un manchon, et
- la figure 4, une vue éclatée d'un diffuseur, des bagues de support et des bouchons de l'outillage.

Les éléments présents dans plusieurs figures distinctes sont affectés d'une seule et même référence.

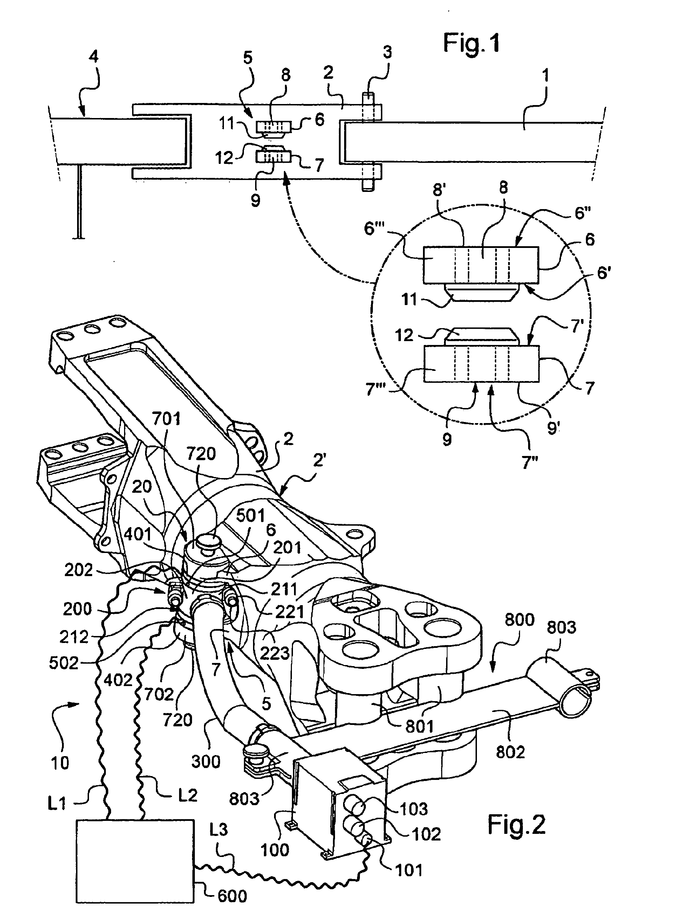

La figure 1 présente une pale 1 de giravion fixée à un manchon 2 par des broches 3, le manchon 2 étant lui-même solidaire en rotation d'un moyeu 4.

Le manchon 2 comporte une chape 5 afin d'être lié à un amortisseur, cet amortisseur étant par exemple un amortisseur interpale.

Par suite, la chape 5 possède une première et une deuxième joues 6, 7 munies chacune d'une première et d'une deuxième surfaces 6'-6", 7'-7". La première surface 6' de la première joue 6 est en regard de la première surface 7' de la deuxième joue 7, l'espace séparant lesdites premières surfaces 6', 7' pouvant alors accueillir une rotule de fixation de l'amortisseur. Dès lors, une première bague 11 est collée à la première surface 6' de la première joue 6, une deuxième bague 12 étant collé contre la première surface 7' de la deuxième joue 7.

Pour fixer la rotule d'un amortisseur, un opérateur positionne un premier méplat de la rotule contre la première bague et un deuxième méplat de cette rotule contre la deuxième bague. Ensuite, il insère une broche successivement dans un premier orifice de brochage 8 allant de la première surface 6' à la deuxième surface 6" de la première joue 6, dans la première bague 11 entourant le premier orifice de brochage 8, puis dans la rotule, ensuite dans la deuxième bague 12 entourant un deuxième orifice de brochage 9 allant de la première surface 7' à la deuxième surface 7" de la deuxième joue 7, et enfin dans le deuxième orifice de brochage 9.

On note que les premier et deuxième orifices de brochages 8, 9 sont avantageusement délimités par des premier et deuxième inserts 8', 9' montés en force au sein des joues.

Ce dispositif de fixation d'un amortisseur répond aux besoins. Néanmoins, on constate que l'extrémité de l'amortisseur entourant la rotule entre parfois en contact avec les première et deuxième bagues 11, 12. La détérioration des première et deuxième bagues 11, 12 en résultant conduit à leur remplacement.

La figure 2 présente un outillage 10 portatif et amovible selon l'invention pour procéder au collage des première et deuxième bagues 11, 12 en une durée minimale sans risquer d'endommager le corps 2' du manchon 2.

Cet outillage comporte une étuve locale 20, amovible et portative, apte à positionner et à chauffer les première et deuxième bagues 11, 12 pour les coller aux premières surfaces 6', 7' des première et deuxième joues.

Cette étuve locale 20 comprend un diffuseur 200 muni d'une première coquille 201 semi-cylindrique et d'une deuxième coquille 202 semi-cylindrique.

On remarque que la première coquille 201 comporte deux organes de fixation 223 en forme de U, chaque organe de fixation 223 coopérant avec une molette de fixation 221 de la deuxième coquille 202. Lorsque ces première et deuxième coquilles 201, 202 sont assemblées, elles forment un tunnel de chauffe délimitant un espace interne cylindrique.

De plus, les première et deuxième extrémités 211, 212 du diffuseur 200 sont obturées par un support de bague par bague à coller soit un premier et un deuxième supports de bagues 401, 402, ces premier et deuxième supports de bague 401, 402 accueillant les première et deuxième bagues 11, 12.

L'ensemble incluant le diffuseur 200 ainsi que les premier et deuxième supports de bague 401, 402 est alors agencé entre les premières surfaces 6', 7' des première et deuxième joues 6, 7.

En outre, l'étuve portative comporte un capteur de température par bague à coller soit un premier et un deuxième capteurs de température 501, 502. Par exemple, les premier et deuxième capteurs de température 501, 502 sont des thermocouples agencés dans l'épaisseur des premier et deuxième supports de bague 401, 402.

Les premier et deuxième capteurs de température 501, 502 sont alors reliés par des première et deuxième liaisons électriques L1, L2, de type filaire ou sans fil, à un moyen de commande 600 de l'outillage 10

Dès lors, l'outillage 10 comporte une chaufferette 100 apte à envoyer de l'air chaud dans l'espace interne 203 du diffuseur 200 via un conduit d'acheminement 300, tel qu'un tuyau souple.

On utilise éventuellement une chaufferette, munie d'un connecteur électrique 101 pour être relié par une troisième liaison électrique L3 au moyen de commande 600, d'un connecteur 102 pour être approvisionné en air par un moyen usuel non représenté sur les figures, et d'une évacuation 103 apte à rejeter de l'air.

Cette chaufferette étant connue, on se référera à la littérature pour obtenir plus d'informations la concernant.

Un opérateur indique alors au moyen de commande un cycle prédéterminé de chauffage, en spécifiant les gradients de température à respecter, la température de palier à atteindre et la durée durant laquelle la température de palier doit être maintenue.

Le moyen de commande 600 régule le fonctionnement de la chaufferette 100 en fonction des informations de température lui parvenant des premier et deuxième capteurs de température.

Optionnellement, pour garantir un bon positionnement des supports de bague et éviter une diffusion de la chaleur provenant du diffuseur 200 vers des zones sensibles du manchon 2, l'outillage 10 comporte un bouchon par support de bague, soit un premier et un deuxième bouchons 701, 702 sur la figure 2.

Par suite, le premier bouchon 701 comprend une face qui est accolée à la deuxième surface 6" de la première joue 6 de manière à obturer hermétiquement le premier orifice de brochage 8 au niveau de cette deuxième surface 6".

Le premier bouchon 701 est alors fixé au premier support de bague 401 à l'aide d'un moyen de serrage 720. Le premier support de bague 401 et le premier bouchon 701 enserrent alors la première joue 6, le premier support de bague 401 plaquant la première bague 11 contre la première surface 6' de la première joue 6 à la pression requise. Par sécurité, le moyen de serrage peut être relié au bouchon associé par un lien, de type chaîne par exemple.

De même, le deuxième bouchon 702 comprend une face qui est accolée à la deuxième surface 7" de la deuxième joue 7 de manière à obturer hermétiquement le deuxième orifice de brochage 9 au niveau de cette deuxième surface 7". Le deuxième bouchon 702 est alors fixé au deuxième support de bague 402 à l'aide d'un moyen de serrage 720. Le support de bague 402 et le deuxième bouchon 702 enserrent alors la deuxième joue 7, le deuxième support de bague 402 plaquant la deuxième bague 12 contre la première surface 7' de la deuxième joue 7 à la pression requise.

Enfin, l'outillage 10 comporte avantageusement un moyen de soutien 800.

En effet, pour optimiser les opérations de collage un opérateur se contente de démonter la pale 1, et laisse donc le manchon 2 fixé au moyeu. Par conséquent, l'étuve de l'outillage 10 se trouve par exemple à plusieurs mètres au dessus du sol. Le moyen de soutien 800 permet alors de positionner la chaufferette 100 à proximité de l'étuve.

Ce moyen de soutien 800 est muni d'au moins un pied 801 s'étendant selon une première direction, par exemple des douilles cylindriques dirigées selon la verticale. Un moyen de fixation 802 s'étendant selon une deuxième direction orthogonale à la première direction est solidarisé aux pieds 801 du moyen de soutien 800, le moyen de fixation 802 étant par exemple une plaque mince dirigée selon l'horizontale dont les extrémités sont pourvues de glissières 803 aptes à accueillir chacune une chaufferette.

Une fois la pale démontée, l'opérateur fixe le moyen de soutien 800 au manchon 2 en brochant les pieds 801 en lieu et place de la pale 1. Il agence alors une chaufferette 100 dans une glissière 803 pour disposer cette chaufferette à proximité des joues conte lesquelles une bague doit être collée.

On constate qu'il est possible d'agencer deux chaufferettes sur le moyen de soutien, afin d'utiliser deux étuves portatives 20 pour remplacer les bagues de deux chapes distinctes du manchon 2.

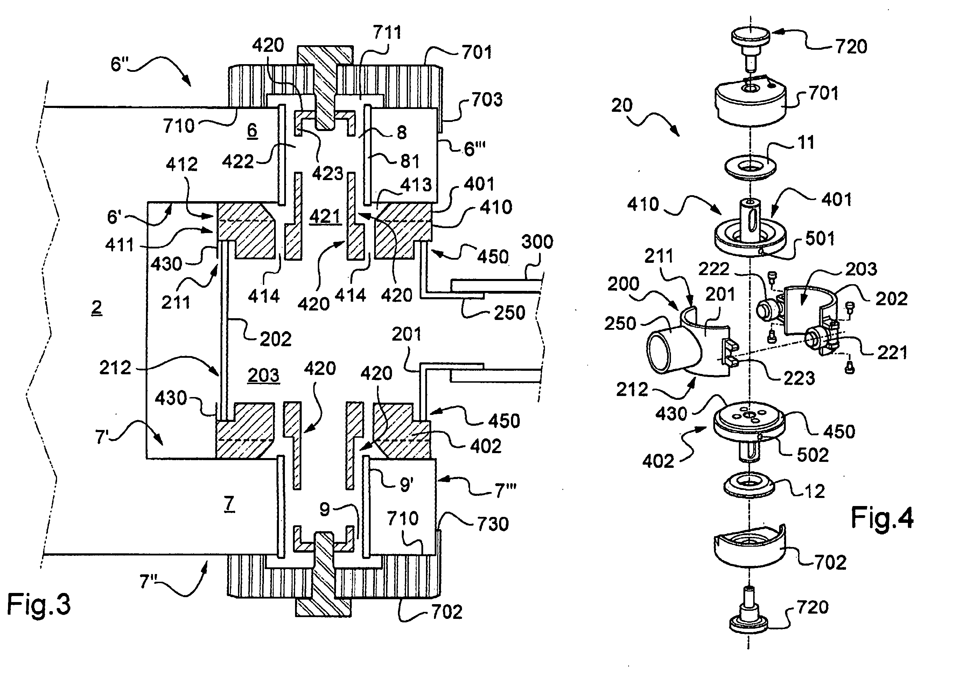

La figure 3 présente une vue d'une étuve portative 20 selon une réalisation préférée agencée sur une chape pour coller des première et deuxième bagues 11, 12, la figure 4 présentant une vue éclatée de cette étuve portative 20.

Ainsi, afin de coller ces première et deuxième bagues 11, 12, un opérateur répand de la colle sur les première et deuxième bagues 11, 12 et/ ou les premières surfaces 6', 7' des première et deuxième joues 6, 7, en utilisant par exemple une colle de type HYSOL®.

Dès lors, il dispose les première et deuxième bagues 11, 12 dans des premier et deuxième supports de bagues 401, 402.

Le premier support de bague 401 comporte un plateau 410 obturant une première extrémité 211 du diffuseur 200. Ce plateau 410 possède alors une première tranche 411 et une deuxième tranche 412, la première tranche 411 étant en contact avec le diffuseur 200 et notamment son espace interne 203 alors qu'un évidement 413 conformé à la forme des bagues est réalisé dans la deuxième tranche 412 pour accueillir la première bague 11.

De plus, au moins un perçage 414 traverse la première tranche 412 selon son épaisseur pour relier l'espace interne 203 à l'évidement 413, quatre perçages par exemple comme le montre la figure 4.

Le premier support de bague 401 comprend aussi une cheminée 420 traversant le plateau 410 de part en part et saillant de la deuxième tranche 412 de ce plateau 410. Ainsi, la cheminée 420 s'étend axialement à partir de la première tranche 411 pour traverser la deuxième tranche 412 et finalement saillir du plateau 410. Le premier support de bague 401 a par suite une forme de T.

Cette cheminée 420 comporte un orifice axial 421 la traversant de part en part, et au moins une lumière 422 ménagée au travers de sa périphérie 423, dans la zone saillante de la cheminée saillant du plateau 410.

Ainsi, après avoir disposé la première bague 11 dans l'évidement 413 du premier support de bague 401, l'opérateur plaque la deuxième tranche 412 du premier support de bague 401 contre la première surface 6' de la première joue 6.

Par suite, la zone saillante de la cheminée pénètre dans le premier orifice de brochage 8 de la première joue 6, ce premier orifice de brochage 8 étant délimité radialement par un premier insert 8'. L'orifice axial 421 de la cheminée 420 sera alors apte à déboucher sur l'espace interne 203 d'un diffuseur, les lumières 422 de cette cheminée 420 débouchant sur cet orifice axial 421 et sur le premier orifice de brochage 8.

Le deuxième support de bague 402 étant identique au premier support de bague 401, après avoir disposé la deuxième bague 12 dans l'évidement du deuxième support de bague 402, l'opérateur plaque la deuxième tranche 412 du deuxième support de bague 402 contre la première surface 7' de la deuxième joue 7.

A ce stade de l'installation de l'étuve portative 20 sur la chape du manchon 2, l'opérateur va utiliser un premier et un deuxième bouchons 701, 702.

Ainsi, il accole une face du premier bouchon 701 contre la deuxième surface 6" de la première joue 6 afin d'obturer hermétiquement le premier orifice de brochage 8. Ensuite, il fixe ce premier bouchon 701 au premier support de bague 401 à l'aide d'un moyen de serrage 720, le moyen de serrage 720 traversant le premier bouchon 701 pour être vissé à un filetage de la cheminée 420 du premier support de bague 401 entourant l'orifice radial 421.

En vissant au maximum le moyen de serrage, l'opérateur est assuré d'appliquer sur la première bague 411 la pression nécessaire au collage. Néanmoins, par sécurité il est concevable d'agencer un ressort taré dans l'orifice de brochage 8 entre la deuxième tranche du plateau du premier support de bague 401 et le premier bouchon 701.

On note que le premier bouchon comporte une saillie de détrompage 730 conformée à la forme du premier bord 6"' de la première joue 6, cette saillie de détrompage coopérant avec ledit premier bord pour assurer un positionnement optimal du bouchon.

De plus, pour optimiser la circulation d'air chaud dans le premier orifice de brochage 8 lors du collage, le premier bouchon 701 est partiellement évidé de manière à présenter un évidement 711 en regard du premier orifice de brochage 8.

Le deuxième bouchon 702 étant identique au premier bouchon, l'opérateur répète les opérations précédentes pour fixer le deuxième bouchon 702 au deuxième support de bague 402.

Ensuite, l'opérateur agence le diffuseur 200 entre les premier et deuxième supports de bague 401, 402 pour finaliser l'installation de l'étuve portative 20 de l'outillage 10.

A cet effet, on note que chaque support de bague 401, 402 comporte un évidement circulaire périphérique 450 dans sa première tranche 411 apte à être en contact avec les arêtes des première et deuxième coquilles 201, 202 du diffuseur 200. Un rail 430 borde avantageusement partiellement l'évidement circulaire périphérique 450, ce rail parcourant un demi-cercle au niveau d'une zone bordée des supports de bague 401, 402.

On remarque que la saillie de détrompage des premier et deuxième bouchons 701, 702 associée à un serrage déterminé des moyens de serrage 720 des premier et deuxième bouchons induisent un positionnement précis des premier et deuxième supports de bague 401, 402. Dès lors, les rails 430 des premier et deuxième supports de bague 401, 402 sont en vis-à-vis l'un de l'autre.

L'opérateur place alors la deuxième coquille 202 dans les évidements circulaires périphériques 450 non bordés des premier et deuxième supports de bague 401, 402, puis fait effectuer une rotation de 180 degrés à cette deuxième coquille 202. La deuxième coquille 202 est alors agencée entre les zones bordées des premier et deuxième supports de bague 401, 402.

Ensuite, l'opérateur place la première coquille 201 dans les évidements circulaires périphériques 450 non bordés des premier et deuxième supports de bague 401, 402, puis fixe la deuxième coquille 202 à la première coquille 201 à l'aide des molettes de fixation 221.

L'étuve portative 20 étant désormais en place, l'opérateur relie un embout 250 de la première coquille 201 à la chaufferette 100 à l'aide d'un conduit d'acheminement 300.

Pour finir, cet opérateur connecte la chaufferette 100 et les premier et deuxième capteurs de température 501, 502 au moyen de commande 600.

A l'aide du moyen de commande 600 l'opérateur applique alors le cycle de chauffage prédéterminé par le fabricant de la colle utilisée afin de coller à chaud la bague en une durée réduite, à savoir à une température supérieure à la température ambiante.

Naturellement, la présente invention est sujette à de nombreuses variations quant à sa mise en oeuvre. Bien qu'une réalisation ait été décrite, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Bien que les figures 2 à 4 présentent un outillage muni de deux supports de bagues, et par suite de deux bouchons, il est concevable d'utiliser un unique support de bague agencé à une extrémité du diffuseur si l'on souhaite coller uniquement une bague. L'autre extrémité de ce diffuseur est alors obturée par un capuchon.

Un tel capuchon peut être un support de bague du type décrit précédemment, pour lequel on obture néanmoins les perçages et l'orifice axial. Un bouchon peut aussi être fixé à un tel capuchon.

## Revendications

1. Outillage (10) portatif apte à coller une ou deux bagues (11, 12) respectivement à une ou deux joues (6, 7) d'une chape (5) d'un manchon (2) de pale (1), chaque joue (6, 7) comportant une première et une deuxième surfaces (6', 6"-7',7"), les premières surfaces (6', 7') des première et deuxième joues (6, 7) étant en regard l'une de l'autre, chaque bague (11, 12) étant disposée autour d'un orifice de brochage (8, 9) ménagé dans la joue (6, 7) correspondante,
comportant une chaufferette (100), un diffuseur (200) délimitant un espace interne (203) alimenté en air chaud par ladite chaufferette (100) via un conduit d'acheminement (300) pour chauffer ladite bague (11, 12) à coller, un support de bague (401, 402) par bague (11, 12) à coller agencé à une extrémité (211, 212) dudit diffuseur (200), au moins un capteur de température (501, 502) pour déterminer la température de la bague (11, 12) à coller, et un moyen de commande (600) de ladite chaufferette (100) recevant les informations dudit capteur de température (501, 502).

2. Outillage selon la revendication 1,
**caractérisé en ce qu'**il comporte un premier et un deuxième supports de bague (401, 402), ledit premier support de bague (401) étant agencé à une première extrémité (211, 212) dudit diffuseur (200), ledit deuxième support de bague (402) étant agencé à une deuxième extrémité (212) dudit diffuseur (200).

3. Outillage selon l'une quelconque des revendications précédentes,
**caractérisé en ce que**, chaque support de bague (401, 402) comporte un plateau (410) venant obturer une extrémité (211, 212) dudit diffuseur (200), ledit plateau (410) ayant une première tranche (411) en contact avec ledit espace interne (203) et une deuxième tranche (412) apte à être en contact avec une première surface (6', 7') d'une joue (6, 7), ladite deuxième tranche (412) comportant un évidement (413) conformé à ladite bague (11, 12) à coller et ladite première tranche (411) ayant au moins un perçage (414) mettant en relation ledit espace interne (203) et ledit évidement (413).

4. Outillage selon la revendication 3,
**caractérisé en ce que**, chaque support de bague (401, 402) comporte une cheminée (420) solidaire dudit plateau (410) s'étendant axialement à partir de ladite première tranche (411) pour s'éloigner dudit diffuseur (200) afin d'être apte à pénétrer dans ledit orifice de brochage (8, 9) d'une joue (6, 7), ladite cheminée (420) comportant un orifice axial (421) la traversant de part en part et débouchant sur ledit espace interne (203).

5. Outillage selon la revendication 4,
**caractérisé en ce que**, ladite cheminée (420) comporte au moins une lumière (422) ménagée au travers de sa périphérie (423) débouchant sur ledit orifice axial (421).

6. Outillage selon l'une quelconque des revendications précédentes,
**caractérisé en ce qu'**il comporte un bouchon (701, 702) par bague (11, 12) à coller apte à être accolé contre une deuxième surface (6", 7") d'une joue (6, 7) donnée en obturant l'orifice de brochage (8, 9) de ladite joue (6, 7) donnée, ledit bouchon (701, 702) étant fixé à un support de bague (401, 402) pour comprimer la bague (11, 12) à coller contre la première surface (6', 7') de la joue (6, 7) donnée.

7. Outillage selon la revendication 6,
**caractérisé en ce que**, ledit bouchon (701, 702) ayant une face (710) apte à être accolée contre une deuxième surface (6", 7") d'une joue (6, 7), ladite face (710) est partiellement évidée en son centre.

8. Outillage selon l'une quelconque des revendications 6 à 7,
**caractérisé en ce que** ledit support de bague (401, 402) ayant une cheminée (420), ledit bouchon (701, 702) est traversé par un moyen de serrage (720) apte à être vissé dans ladite cheminée (420).

9. Outillage selon l'une quelconque des revendications 6 à 8,
**caractérisé en ce que** ledit bouchon (701, 702) comporte une saillie de détrompage (730) apte à coopérer avec un bord (6"', 7"') d'une joue (6, 7).

10. Outillage selon l'une quelconque des revendications 6 à 9,
**caractérisé en ce qu'**il comporte un ressort taré apte à être agencé dans un orifice de brochage (8, 9) entre ledit bouchon (701, 702) et le support de bague (401, 402) associé.

11. Outillage selon l'une quelconque des revendications précédentes,
**caractérisé en ce qu'**il comporte un moyen de soutien (800) comportant au moins un pied (801) apte à être broché audit manchon (2) à la place d'une pale (1), ledit moyen de soutien (800)
étant muni d'un moyen de fixation (802) solidaire dudit pied (801), ledit moyen de fixation (802) étant pourvu d'une glissière (803) pour accueillir ladite chaufferette (100).

12. Outillage selon l'une quelconque des revendications précédentes,
**caractérisé en ce que** ledit capteur de température (501, 502) est agencé dans ledit support de bague (401, 402).

13. Outillage selon la revendication 1,
**caractérisé en ce qu'**il comporte :
- un premier et un deuxième supports de bague (401, 402), ledit premier support de bague (401) étant agencé à une première extrémité (211) dudit diffuseur (200), ledit deuxième support de bague (402) étant agencé à une deuxième extrémité (212) dudit diffuseur (200),
- un premier et un deuxième capteurs de température (501, 502) agencés respectivement dans les premier et deuxième supports de bague (401, 402), et
- un premier et un deuxième bouchons (701, 702) aptes à être fixés respectivement aux premier et deuxième supports de bague (401, 402).

14. Procédé pour coller à l'aide d'un outillage portatif une première et une deuxième bagues (11, 12) respectivement à une première et une deuxième joues (6, 7) d'une chape (5) d'un manchon (2) de pale (1), chaque joue (6, 7) comportant une première et une deuxième surfaces (6', 6"-7', 7"), les premières surfaces (6', 7') des première et deuxième joues (6, 7) étant en regard l'une de l'autre, chaque bague (11, 12) étant disposée autour d'un orifice de brochage (8, 9) de la joue (6, 7) correspondante; ledit outillage portatif (10) comportant une chaufferette (100), un diffuseur (200) alimenté en air chaud par ladite chaufferette (100) via un conduit d'acheminement (300), un premier et un deuxième supports de bague (401, 402) agencés respectivement à une première et une deuxième extrémités (211, 212) dudit diffuseur (200), un premier et un deuxième bouchons (701, 702) aptes à être fixés respectivement aux premier et deuxième supports de bague (401, 402), un premier et un deuxième capteurs de température (501, 502) agencés respectivement dans les premier et deuxième supports de bague (401, 402), et un moyen de commande (600) de ladite chaufferette (100) recevant les informations desdits premier et deuxième capteurs de température (501,502),
au cours duquel durant une phase de préparation :
- on applique une colle entre chaque bague (11, 12) et une première surface (6', 7') desdites joues (6, 7),
- on dispose une bague (11, 12) dans chaque support de bague (401, 402) et on plaque les premier et deuxième supports de bague (401, 402) contre respectivement la première surface (6', 7') des première et deuxième joues (6, 7),
- on dispose lesdits premier et deuxième bouchons (701, 702) contre les deuxièmes surfaces (6", 7") des première et deuxième joues (6, 7), puis on fixe ces premier et deuxième bouchons (701, 702) aux premier et deuxième supports de bague (401, 402), le premier bouchon (401) et le premier support de bague (701) plaquant la première bague (11) contre la première surface (6') de la première joue (6) alors que le deuxième bouchon (702) et le deuxième support de bague (402) plaquent la deuxième bague (12) contre la première surface (7') de la deuxième joue (7),
- on agence ledit diffuseur (200) entre les premier et deuxième supports de bague (401, 402),
- on relie la chaufferette (100) au diffuseur (200) par ledit conduit d'acheminement (300), puis on connecte cette chaufferette (100) et les premier et deuxième capteurs de température (501, 502) au moyen de commande (600),
puis durant une phase de collage, le moyen de commande (600) ordonne à la chaufferette (100) de fournir de l'air au diffuseur (200) à une température prédéterminée selon un cycle prédéterminé correspondant à la colle utilisée.

## Claims

1. Portable tooling (10) suitable for adhesively bonding one or two rings (11, 12) respectively to one or two cheeks (6, 7) of a yoke (5) of a sleeve (2) of a blade (1), each cheek (6, 7) having first and second surfaces (6', 6" - 7', 7"), the first surfaces (6', 7') of the first and second cheeks (6, 7) facing each other, each ring (11, 12) being placed around a pin orifice (8, 9) formed in the corresponding cheek (6, 7),
comprising a heater (100), a diffuser (200) defining an inside space (203) fed with hot air by said heater (100) via a delivery duct (300) for heating said ring (11, 12) for bonding, one ring support (401, 402) per ring (11, 12) for bonding arranged at one end (211, 212) of said diffuser (200), at least one temperature sensor (501, 502) for determining the temperature of the ring (11, 12) for bonding, and control means (600) for controlling said heater (100) and receiving information from said temperature sensor (501, 502).

2. Tooling according to Claim 1,
**characterised in that** it includes first and second ring supports (401, 402), said first ring support (401) being arranged at a first end (211, 212) of said diffuser (200), said second ring support (402) being arranged at a second end (212) of said diffuser (200).

3. Tooling according to any one of the preceding claims,
**characterised in that** each ring support (401, 402) comprises a tray (410) that closes one end (211, 212) of said diffuser (200), said tray (410) having a first layer (411) in contact with said inside space (203) and a second layer (412) suitable for being in contact with a first surface (6', 7') of a cheek (6, 7), said second layer (412) including a recess (413) matching the shape of said ring (11, 12) for bonding, and said first layer (411) having at least one hole (414) putting said inside space (203) into communication with said recess (413).

4. Tooling according to Claim 3,
**characterised in that** each ring support (401, 402) includes a chimney (420) secured to said tray (410) and extending axially from said first layer (411) away from said diffuser (200) so as to be suitable for penetrating into said pin orifice (8, 9) of a cheek (6, 7), said chimney (420) including an axial orifice (421) passing right through it and opening out into said inside space (203).

5. Tooling according to Claim 4,
**characterised in that** said chimney (420) includes at least one slot (422) formed through its periphery (423) and opening out into said axial orifice (421).

6. Tooling according to any one of the preceding claims,
**characterised in that** it includes one cap (701, 702) per ring (11, 12) for bonding, the cap being suitable for being placed against a second surface (6", 7") of a given cheek (6, 7), thereby closing the pin orifice (8, 9) of said given cheek (6, 7), said cap (701, 702) being fastened to a ring support (401, 402) in order to press the ring (11, 12) for bonding against the first surface (6', 7') of the given cheek (6, 7).

7. Tooling according to Claim 6,
**characterised in that** said cap (701, 702) has a face (710) suitable for being placed against a second surface (6", 7") of a cheek (6, 7), and said face (710) is partially hollowed out in its centre.

8. Tooling according to any one of Claims 6 to 7,
**characterised in that** said ring support (401, 402) has a chimney (420), and said cap (701, 702) has clamping means (720) passing therethrough and suitable for being screwed into said chimney (420).

9. Tooling according to any one of Claims 6 to 8,
**characterised in that** said cap (701, 702) includes a projecting key (730) suitable for cooperating with an edge (6'", 7"') of a cheek (6, 7).

10. Tooling according to any one of Claims 6 to 9,
**characterised in that** it includes a rated spring suitable for being arranged in a pin orifice (B, 9) between said cap (701, 702) and the associated ring support (401, 402).

11. Tooling according to any one of the preceding claims,
**characterised in that** it includes support means (800) having at least one leg (801) suitable for being engaged in said sleeve (2) instead of a blade (1), said support means (800) being provided with fastener means (802) secured to said leg (801), said fastener means (802) being provided with a slideway (803) for receiving said heater (100).

12. Tooling according to any one of the preceding claims,
**characterised in that** said temperature sensor (501, 502) is arranged in said ring support (401, 402).

13. Tooling according to Claim 1,
**characterised in that** it comprises:
- first and second ring supports (401, 402), said first ring support (401) being arranged at a first end (211) of said diffuser (200), said second ring support (402) being arranged at a second end (212) of said diffuser (200),
- first and second temperature sensors (501, 502) respectively arranged in the first and second ring supports (401, 402), and
- first and second caps (701, 702) suitable for being fastened respectively to the first and second ring supports (401, 402).

14. Method of adhesively bonding, using portable tooling, first and second rings (11, 12) respectively to first and second cheeks (6, 7) of a yoke (5) of a sleeve (2) of a blade (1), each cheek (6, 7) having first and second surfaces (6', 6" - 7', 7"), the first surfaces (6', 7') of the first and second cheeks (6, 7) facing each other, each ring (11, 12) being placed around a pin orifice (8, 9) in the corresponding cheek (6, 7), said portable tooling (10) comprising a heater (100), a diffuser (200) fed with hot air by said heater (100) via a delivery duct (300), first and second ring supports (401, 402) arranged respectively at first and second ends (211, 212) of said diffuser (200), first and second caps (701, 702) suitable for being fastened respectively to the first and second ring supports (401, 402), first and second temperature sensors (501, 502) arranged respectively in the first and second ring supports (401, 402), and control means (600) for controlling said heater (100) and receiving information from said first and second temperature sensors (501, 502),
said method comprising a preparatory stage in which the following steps are performed:
- applying an adhesive between each ring (11, 12) and a first surface (6', 7') of said cheeks (6, 7),
- placing a ring (11, 12) in each ring support (401, 402) and pressing the first and second ring supports (401, 402) against the first surface (6', 7') respectively of the first and second cheeks (6, 7),
- placing said first and second caps (701, 702) against the second surfaces (6", 7") of the first and second cheeks (6, 7), and then fastening these first and second caps (701, 702) to the first and second ring supports (401, 402), the first cap (401) and the first ring support (701) pressing the first ring (11) against the first surface (6') of the first cheek (6), whereas the second cap (702) and the second ring support (402) press the second ring (12) against the first surface (7') of the second cheek (7),
- arranging said diffuser (200) between the first and second ring supports (401, 402), and
- connecting the heater (100) to the diffuser (200) control means (600) order the heater (100) to deliver air to the diffuser (200) at a predetermined temperature according to a predetermined cycle that corresponds to the adhesive used.

## Patentansprüche

1. Tragbares Werkzeug (10) zum Kleben einer Buchse oder von zwei Buchsen (11, 12) an eine Wange oder an zwei Wangen (6, 7) einer Blattverstellgabel (5) einer Manschette (2) für ein Rotorblatt (1), wobei jede Wange (6, 7) eine erste und eine zweite Oberfläche (6', 6", 7', 7") aufweist, wobei die ersten Oberflächen (6', 7') der ersten und zweiten Wangen (6, 7) sich gegenüberliegen und jede Buchse (11, 12) um ein in die entsprechende Wange (6, 7) eingearbeitetes Bohrloch (8, 9) angeordnet ist,
mit einer Heizung (100), einem Verteiler (200), der einen durch die Heizung (100) über eine Verbindungsleitung (300) mit heißer Luft versorgten Innenraum (203) eingrenzt, um die zu klebende Buchse (11, 12) aufzuheizen, einem Buchsenhalter (401, 402) pro zu klebender Buchse (11, 12), der an einem Ende (211, 212) des Verteilers (200) angeordnet ist, mindestens einem Temperaturfühler (501, 502) zum Bestimmen der Temperatur der zu klebenden Buchse (11, 12) und mit einem Steuermittel (600) für die Heizung (100), welches Informationen von dem Temperaturfühler (501, 502) empfängt.

2. Werkzeug nach Anspruch 1,
**dadurch gekennzeichnet, dass** es einen ersten und einen zweiten Buchsenhalter (401, 402) aufweist, wobei der erste Buchsenhalter (401) an einem ersten Ende (211, 212) des Verteilers (200) angeordnet ist, und der zweite Buchsenhalter (402) an einem zweiten Ende (212) des Verteilers (200) angeordnet ist.

3. Werkzeug nach einem der vorstehenden Ansprüche,
**dadurch gekennzeichnet, dass** jeder der Buchsenhalter (401, 402) eine Platte (410) aufweist, die ein Ende (211, 212) des Verteilers (200) verschließt, wobei die Platte (410) einen ersten Abschnitt (411) in Kontakt mit dem Innenraum (203) und einen zweiten Abschnitt (412) aufweist, der in Kontakt mit einer ersten Oberfläche (6', 7') einer Wange (6, 7) sein kann, wobei der zweite Abschnitt (412) eine Ausnehmung (413) aufweist, die an die zu klebende Buchse (11, 12) angepasst ist, und wobei der erste Abschnitt (411) mindestens eine Bohrung (414) aufweist, die den Innenraum (203) und die Ausnehmung (413) verbindet.

4. Werkzeug nach Anspruch 3,
**dadurch gekennzeichnet, dass** jeder Buchsenhalter (401, 402) einen mit der Platte (410) fest verbundenen Abzug (420) aufweist, der sich axial ausgehend von dem ersten Abschnitt (411) erstreckt, um den Verteiler (200) zu verlängern, um in der Lage zu sein, in das Bohrloch (8, 9) einer Wange (6, 7) einzudringen, wobei der Abzug (420) eine axiale Öffnung (421) aufweist, die ihn vollständig durchquert und in dem Innenraum (203) mündet.

5. Werkzeug nach Anspruch 4,
**dadurch gekennzeichnet, dass** der Abzug (420) mindestens eine Öffnung (422) aufweist, die seine Wandung (423) durchquert und in der axialen Öffnung (421) mündet.

6. Werkzeug nach einem der vorstehenden Ansprüche,
**dadurch gekennzeichnet, dass** es eine Kappe (701, 702) pro zu klebender Buchse (11, 12) aufweist, die gegen eine zweite Oberfläche (6", 7") einer vorgegebenen Wange (6, 7) angedrückt werden kann, wodurch sie das Bohrloch (8, 9) der vorgegebenen Wange (6, 7) verschließt, wobei die Kappe (701, 702) an einem Buchsenhalter (401, 402) befestigt ist, um die zu klebende Buchse (11, 12) gegen die erste Oberfläche (6', 7') der vorgegebenen Wange (6, 7) zu pressen.

7. Werkzeug nach Anspruch 6,
**dadurch gekennzeichnet, dass** die Kappe (701, 702) eine Fläche (710) aufweist, die an eine zweite Oberfläche (6", 7") einer Wange (6, 7) angefügt werden kann, wobei die Fläche (710) eine teilweise Aussparung in ihrer Mitte aufweist.

8. Werkzeug nach einem der Ansprüche 6 bis 7,
**dadurch gekennzeichnet, dass** der Buchsenhalter (401, 402) einen Abzug (420) aufweist, wobei die Kappe (701, 702) von einem Klemmmittel (720) durchquert wird, welches in den Abzug (420) geschraubt werden kann.

9. Werkzeug nach einem der Ansprüche 6 bis 8,
**dadurch gekennzeichnet, dass** die Kappe (701, 702) einen Verwechslungssicherungsvorsprung (730) aufweist, der mit einem Rand (6'", 7'") einer Wange (6, 7) zusammenwirken kann.

10. Werkzeug nach einem der Ansprüche 6 bis 9,
**dadurch gekennzeichnet, dass** es eine Druckfeder aufweist, die in einem Bohrloch (8, 9) zwischen der Kappe (701, 702) und dem zugehörigen Buchsenhalter (401, 402) angeordnet werden kann.

11. Werkzeug nach einem der vorstehenden Ansprüche,
**dadurch gekennzeichnet, dass** es ein Haltemittel (800) aufweist, mit mindestens einem Fuß (801), der auf die Manschette (2) anstelle eines Rotorblatts (1) aufgesteckt werden kann, wobei das Haltemittel (800) mit einem mit dem Fuß (801) fest verbundenen Befestigungsmittel (802) versehen ist, und das Befestigungsmittel (802) eine Gleitschiene (803) aufweist zur Aufnahme der Heizung (100).

12. Werkzeug nach einem der vorstehenden Ansprüche,
**dadurch gekennzeichnet, dass** der Temperaturfühler (501, 502) in dem Buchsenhalter (401, 402) angeordnet ist.

13. Werkzeug nach Anspruch 1,
**dadurch gekennzeichnet, dass** es aufweist:
- einen ersten und einen zweiten Buchsenhalter (401, 402), wobei der erste Buchsenhalter (401) an einem ersten Ende (211) des Verteilers (200) und der zweite Buchsenhalter (402) an einem zweiten Ende (212) des Verteilers (200) angeordnet ist,
- einen ersten und einen zweiten Temperaturfühler (501, 502), die jeweils in dem ersten und zweiten Buchsenhalter (401, 402) angeordnet sind, und
- eine erste und eine zweite Kappe (701, 702), die jeweils an dem ersten und zweiten Buchsenhalter (401, 402) befestigt werden können.

14. Verfahren zum Kleben einer ersten und einer zweiten Buchse (11, 12) jeweils an eine erste und zweite Wange (6, 7) einer Blattverstellgabel (5) einer Manschette (2) für ein Rotorblatt (1) mit Hilfe eines tragbaren Werkzeugs, wobei jede Wange (6, 7) eine erste und eine zweite Oberfläche (6', 6", 7', 7") aufweist, wobei die ersten Oberflächen (6', 7') der ersten und zweiten Wangen (6, 7) sich gegenüberliegen und jede Buchse (11, 12) um ein Bohrloch (8, 9) der entsprechenden Wange (6, 7) angeordnet ist, das tragbare Werkzeug (10) eine Heizung (100), einen Verteiler (200), der über eine Verbindungsleitung (300) von der Heizung (100) mit heißer Luft versorgt wird, einen ersten und einen zweiten Buchsenhalter (401, 402), die jeweils an einem ersten und einem zweiten Ende (211, 212) des Verteilers (200) angeordnet sind, eine erste und eine zweite Kappe (701, 702), die jeweils am ersten und zweiten Buchsenhalter (401, 402) befestigt werden können, einen ersten und einen zweiten Temperaturfühler (501, 502), die jeweils in dem ersten und zweiten Buchsenhalter (401, 402) angeordnet sind, und ein Steuermittel (600) der Heizung (100), welches Informationen des ersten und zweiten Temperaturfühlers (501, 502) empfängt, aufweist,
wobei, während einer Vorbereitungsphase:
- ein Klebstoff zwischen jeder Buchse (11, 12) und einer ersten Oberfläche (6', 7') der Wangen (6, 7) aufgetragen wird,
- eine Buchse (11, 12) in jeden Buchsenhalter (401, 402) eingebracht wird, und der erste und der zweite Buchsenhalter (401, 402) jeweils gegen die erste Oberfläche (6', 7') der ersten und zweiten Wange (6, 7) gedrückt werden,
- die erste und die zweite Kappe (701, 702) an den zweiten Oberflächen (6", 7") der ersten und der zweiten Wange (6, 7) angebracht werden, und anschließend die erste und die zweite Kappe (701, 702) an dem ersten und dem zweiten Buchsenhalter (401, 402) befestigt werden, wobei die erste Kappe (401) und der erste Buchsenhalter (701) die erste Buchse (11) gegen die erste Oberfläche (6') der ersten Wange (6) andrücken, während die zweite Kappe (702) und der zweite Buchsenhalter (402) die zweite Buchse (12) gegen die erste Oberfläche (7') der zweiten Wange (7) andrücken,
- der Verteiler (200) zwischen dem ersten und dem zweiten Buchsenhalter (401, 402) angeordnet wird,
- die Heizung (100) über die Verbindungsleitung (300) mit dem Verteiler (200) verbunden wird, und anschließend die Heizung (100) und der erste und der zweite Temperaturfühler (501, 502) mit Hilfe der Steuerung (600) verbunden werden,
und anschließend während einer Klebephase das Steuermittel (600) der Heizung (100) den Befehl gibt, Luft an den Verteiler (200) zu liefern mit einer vorbestimmten Temperatur während eines vorbestimmten Zyklus' in Abhängigkeit von dem verwendeten Klebstoff.
